# EUROPEAN PATENT SPECIFICATION

(11) **EP 3 121 072 B1**
(45) Date of publication and mention of the grant of the patent: **30.10.2019**
(21) Application number: 16180532.0
(22) Date of filing: 21.07.2016
(51) Int. Cl.: B60S 1/24

(54) **SLAVE LINK ASSEMBLY, ESPECIALLY FOR A WINDSCREEN WIPER MECHANISM, AND WINDSCREEN WIPER MECHANISM CONTAINING SUCH AN ASSEMBLY**
SLAVE-VERBINDUNGSANORDNUNG, INSBESONDERE FÜR EINEN SCHEIBENWISCHERMECHANISMUS, UND SCHEIBENWISCHERMECHANISMUS MIT SOLCH EINER ANORDNUNG
ENSEMBLE DE LIAISON ESCLAVE, NOTAMMENT POUR UN MÉCANISME D'ESSUIE-GLACE ET MÉCANISME D'ESSUIE-GLACE CONTENANT UN TEL ENSEMBLE

(30) Priority: 24.07.2015 PL 41323715
(43) Date of publication of application: 25.01.2017
(73) Proprietor: Valeo Autosystemy SP. Z.O.O., 32-050 Skawina (PL)
(72) Inventor: ORZEL, Wojciech, 32-050 SKAWINA (PL); PERMUS, Mariusz, 32-020 Wieliczka (PL)
(74) Representative: Callu-Danseux, Violaine

(56) References cited:
- WO-A1-2009/127748
- DE-A1- 10 034 090
- DE-A1-102011 077 258
- US-A1- 2015 143 654

## Description

The subject matter of the invention is a slave link assembly, especially for a windscreen wiper mechanism, comprising a slave link in the form of an elongated element having two ends, with a fastening region located between these ends, said region being adapted to fastening a master link to it by means of a bearing.

In typical windscreen wiper mechanisms known in the prior art, the arms of the wipers are fastened to a so-called shaft. The shaft, rotating through a certain angle, alternating in opposite directions, causes the arm of the wiper to move above the windscreen, and then to return to the starting position. Wiper systems are driven by electric motors. An arrangement of corresponding external mechanisms makes it possible to change the rotary movement of the motor into corresponding movement of the wiper arms. Usually, this arrangement contains a drive shaft, a motor arm connected in rotary manner to a link, to which arms are fastened in which the shafts are mounted.

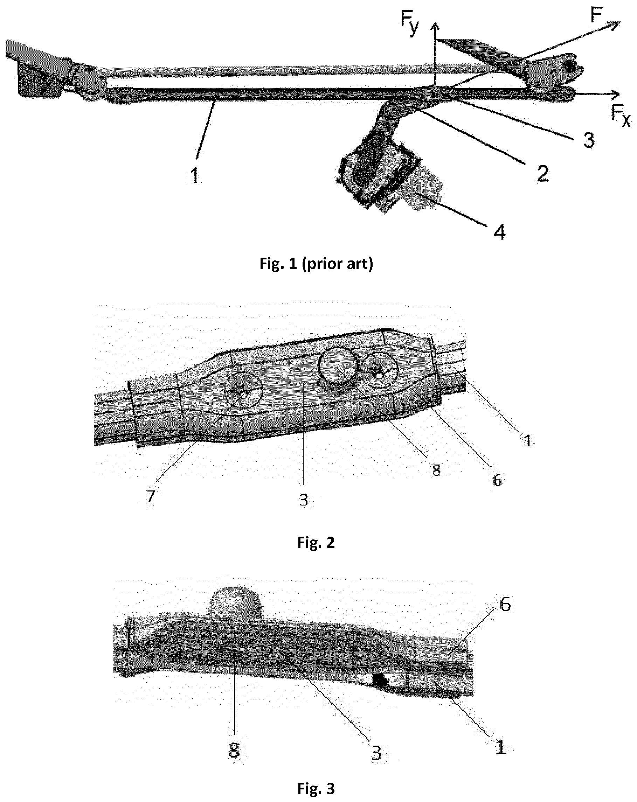

There is a known mechanism, illustrated in Fig. 1, in which the rotating arm (5) of the motor (4) is connected in rotary manner to the master link (2), which is fastened in rotary manner between the ends of the slave link (1). The force F exerted by the master link (2) on the slave link (1) has two components, i.e., the force Fx acting in the direction of the lengthwise axis of the slave link (1), which is the desired force causing the movement of the slave link (1), and the force Fy acting in the direction perpendicular to the lengthwise axis of the slave link (1), which force is liable to cause buckling of the slave link (1).

In view of the risk of buckling of the link, it is necessary to employ links of increased strength in such mechanisms. Usually, in order to increase the strength of a link, a material of greater thickness is used to produce it, which causes a substantial increase in the material consumption and an increased weight of the wiper mechanism.

Document DE 100 34 090 A1 discloses a slave link assembly according to the preamble of claim 1.

The goal of the invention is therefore to provide a slave link of optimal strength which does not have the aforementioned drawbacks.

The essence of the invention is a slave link assembly (1), especially for a windscreen wiper mechanism, comprising a slave link (1) in the form of an elongated element having two ends, with a fastening region (3) located between these ends, said region being adapted to fastening a master link (2) to it by means of a bearing (8), characterized in that the slave link assembly (1) has a reinforcing element (6) secured in the fastening region (3) so as to decrease the stresses in the slave link (1) caused by the action of the force F exerted by the master link (2) on the slave link (1) after proper fastening of the master link (2).

According to the invention, after proper fastening of the master link (2), the pin of the bearing (8) connecting the master link (2) to the slave link assembly (1) passes through the reinforcing element (6).

Advantageously, the reinforcing element (6) is adjacent to the surface of the fastening region (3) of the slave link (1).

Advantageously, the reinforcing element (6) is permanently secured to the slave link (1).

Advantageously, the reinforcing element (6) is permanently secured to the slave link (1) by heat sealing, press fitting, welding, or by means of at least one screw, rivet, or pin.

Advantageously, in the fastening region (3) the dimension of the slave link (1) in the plane of action of the force F exerted by the master link (2) on the slave link (1) and in the direction transverse to the lengthwise axis of the slave link (1) is larger than the dimension of the slave link (1) in its remaining part.

The essence of the invention is likewise a windscreen wiper mechanism containing a slave link assembly (1) according to any one of the preceding claims.

Increasing the strength of the slave link by the use of an additional reinforcing element reducing the stresses in the link makes it possible to limit the consumption of material, while assuring the appropriate strength in the region of the link most subject to deformation.

The permanent fastening of the reinforcing element to the link makes it possible to limit the movements of the element relative to the link.

The increasing of the strength can be additionally realized by increasing the dimension of the slave link in the plane of action of the force F exerted by the master link on the slave link and in the direction of action of the component Fy acting in a direction perpendicular to the lengthwise axis of the slave link.

The invention shall now be presented more closely in advantageous sample embodiments, with reference to the enclosed figures, in which:
Fig. 2 shows the slave link assembly with a fastening region, reinforced by a reinforcing element in top view,
Fig. 3 shows the slave link assembly with a fastening region, reinforced by a reinforcing element in bottom view,
Fig. 4 shows the windscreen wiper mechanism with the slave link assembly containing a reinforcing element.

Fig. 2 and Fig 3 show the slave link assembly (1) of a windscreen wiper mechanism in which a rotating arm of a motor is connected in rotary manner to a master link (2) which is fastened in rotary manner with the aid of a bearing (8) located in the fastening region (3) in the slave link (1). On the link (1) there is fastened a reinforcing element (6), which is permanently secured to the link with the aid of a so-called punching (7).

In the fastening region (3) the link (1) is broader (the profile from which it is made is flattened) than in its remaining portion. Both the reinforcing element (6) and the widening of the link, cause an increased strength in the region most subject to deformation due to the action of the force F exerted by the master link (2).

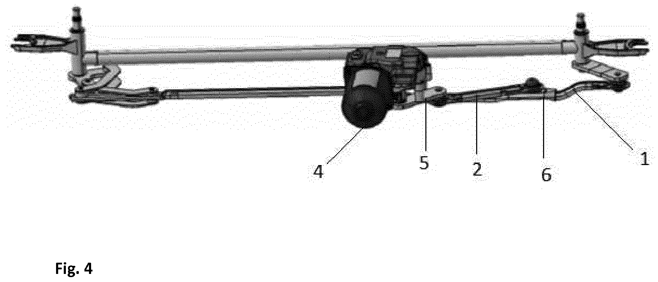

Fig. 4 shows a windscreen wiper mechanism with a slave link assembly (1) containing a reinforcing element (6).

## Claims

1. Slave link assembly (1), especially for a windscreen wiper mechanism, comprising a slave link (1) in the form of an elongated element having two ends, with a fastening region (3) located between these ends, said region being adapted to fastening a master link (2) to it by means of a bearing (8), the slave link assembly (1) having a reinforcing element (6) secured in the fastening region (3) so as to decrease the stresses in the slave link (1) caused by the action of the force F exerted by the master link (2) on the slave link (1) after proper fastening of the master link (2),
wherein after proper fastening of the master link (2), the pin of the bearing (8) connecting the master link (2) to the slave link assembly (1) passes through the reinforcing element (6), **characterised in that**, in the fastening region (3), the link (1) is broader than in its remaining portion.

2. Assembly according to Claim 1, **characterized in that** the reinforcing element (6) is adjacent to the surface of the fastening region (3) of the slave link (1).

3. Assembly according to Claim 1 or 2, **characterized in that** the reinforcing element (6) is permanently secured to the slave link (1).

4. Assembly according to Claim 3, **characterized in that** the reinforcing element (6) is permanently secured to the slave link (1) by heat sealing, press fitting, welding, or by means of at least one screw, rivet, or pin.

5. Assembly according to any one of the preceding claims, **characterized in that** in the fastening region (3) the dimension of the slave link (1) in the plane of action of the force F exerted by the master link (2) on the slave link (1) and in the direction transverse to the lengthwise axis of the slave link (1) is larger than the dimension of the slave link (1) in its remaining part.

6. Windscreen wiper mechanism containing a slave link assembly (1) according to any one of the preceding claims.

## Patentansprüche

1. Slave-Verbindungsanordnung (1), insbesondere für einen Scheibenwischermechanismus, umfassend eine Slave-Verbindung (1) in der Form eines länglichen Elements mit zwei Enden, wobei eine Befestigungszone (3) zwischen diesen Enden angeordnet ist, wobei die Zone geeignet ist, eine Master-Verbindung (2) daran durch ein Lager (8) zu befestigen, wobei die Slave-Verbindungsanordnung (1) ein Verstärkungselement (6) aufweist, das in der Befestigungszone (3) derart befestigt ist, dass die Belastungen in der Slave-Verbindung (1) verringert werden, welche durch die Einwirkung der Kraft F verursacht werden, die von der Master-Verbindung (2) auf die Slave-Verbindung (1) nach der geeigneten Befestigung der Master-Verbindung (2) ausgeübt wird,
wobei nach dem geeigneten Befestigen der Master-Verbindung (2) der Stift des Lagers (8), der die Master-Verbindung (2) mit der Slave-Verbindungsanordnung (1) verbindet, durch das Verstärkungselement (6) hindurchgeht,
**dadurch gekennzeichnet, dass** in der Befestigungszone (3) die Verbindung (1) breiter ist als in ihrem übrigen Abschnitt.

2. Anordnung nach Anspruch 1,
**dadurch gekennzeichnet, dass** das Verstärkungselement (6) der Fläche der Befestigungszone (3) der Slave-Verbindung (1) benachbart ist.

3. Anordnung nach Anspruch 1 oder 2, **dadurch gekennzeichnet, dass** das Verstärkungselement (6) permanent an der Slave-Verbindung (1) befestigt ist.

4. Anordnung nach Anspruch 3, **dadurch gekennzeichnet, dass** das Verstärkungselement (6) permanent an der Slave-Verbindung (1) durch Heißsiegeln, Presspassen, Schweißen oder mittels mindestens einer Schraube, eines Niets oder eines Stifts befestigt ist.

5. Anordnung nach einem der vorhergehenden Ansprüche, **dadurch gekennzeichnet, dass** in der Befestigungszone (3) die Abmessung der Slave-Verbindung (1) in der Wirkungsebene der Kraft F, die von der Master-Verbindung (2) auf die Slave-Verbindung (1) und in der Richtung quer zur Längsachse der Slave-Verbindung (1) ausgeübt wird, größer ist als die Abmessung der Slave-Verbindung (1) in ihrem übrigen Teil.

6. Scheibenwischermechanismus, welcher eine Slave-Verbindungsanordnung (1) nach einem der vorhergehenden Ansprüche enthält.

## Revendications

1. Ensemble liaison esclave (1), spécialement pour un mécanisme d'essuie-glace, comprenant une liaison esclave (1) sous la forme d'un élément allongé ayant deux extrémités, une région de fixation (3) étant située entre ces extrémités, ladite région étant conçue pour y fixer une liaison maîtresse (2) au moyen d'un palier (8), l'ensemble liaison esclave (1) ayant un élément de renforcement (6) fixé dans la région de fixation (3) de sorte à réduire les contraintes dans la liaison esclave (1) provoquées par l'action de la force F exercée par la liaison maîtresse (2) sur la liaison esclave (1) après une fixation correcte de la liaison maîtresse (2), dans lequel, après la fixation correcte de la liaison maîtresse (2), le tourillon du palier (8) reliant la liaison maîtresse (2) à l'ensemble liaison esclave (1) passe à travers l'élément de renforcement (6), **caractérisé en ce que**, dans la région de fixation (3), la liaison (1) est plus large que dans sa partie restante.

2. Ensemble selon la revendication 1,
**caractérisé en ce que** l'élément de renforcement (6) est adjacent à la surface de la région de fixation (3) de la liaison esclave (1).

3. Ensemble selon la revendication 1 ou 2, **caractérisé en ce que** l'élément de renforcement (6) est fixé de manière permanente à la liaison esclave (1).

4. Ensemble selon la revendication 3, **caractérisé en ce que** l'élément de renforcement (6) est fixé de manière permanente à la liaison esclave (1) par thermoscellage, emmanchement à la presse, soudage ou au moyen d'au moins une vis, un rivet ou une broche.

5. Ensemble selon l'une quelconque des revendications précédentes, **caractérisé en ce que**, dans la région de fixation (3), la dimension de la liaison esclave (1) dans le plan d'action de la force F exercée par la liaison maîtresse (2) sur la liaison esclave (1) et, dans la direction transversale à l'axe longitudinal de la liaison esclave (1), est plus importante que la dimension de la liaison esclave (1) dans sa partie restante.

6. Mécanisme d'essuie-glace contenant un ensemble liaison esclave (1) selon l'une quelconque des revendications précédentes.
